# EUROPÄISCHE PATENTSCHRIFT

(11) **EP 0 366 994 B1**
(45) Veröffentlichungstag und Bekanntmachung des Hinweises auf die Patenterteilung: **22.12.1993**
(21) Anmeldenummer: 89119020.9
(22) Anmeldetag: 13.10.1989
(51) Int. Cl.: C05G 1/00, C05G 5/00

(54) **Verfahren zum Herstellen eines Düngers für Hydrokulturen**
Method for the manufacture of a fertilizer for hydroponics
Procédé de fabrication d'un engrais pour hydrocultures

(30) Priorität: 19.10.1988 DE 3835526
(43) Veröffentlichungstag der Anmeldung: 09.05.1990
(73) Patentinhaber: PLANTA-DÜNGEMITTEL GMBH, 93128 Regenstauf (DE)
(72) Erfinder: Pixa, Wolfgang, Dipl.-Ing., D-8413 Regenstauf (DE)
(74) Vertreter: Graf, Helmut, Dipl.-Ing.

(56) Entgegenhaltungen:
- BE-A- 730 694
- CH-A- 569 405
- FR-A- 1 110 060
- FR-A- 1 233 210
- US-A- 2 223 316
- US-A- 4 019 889
- US-A- 4 055 974

## Beschreibung

Die Erfindung bezieht sich auf ein Verfahren zum Herstellen eines Düngers für Hydrokulturen unter Verwendung von Pflanzennährsalzen und Gips bzw. Calciumsulfat sowie auf einen Dünger für Hydrokulturen unter Verwendung von Pflanzennährsalzen und Gips bzw. Calciumsulfat.

Zur Herstellung von Nährlösungen für die Hydrokultur werden entweder Einzeldünger oder Mischungen solcher Dünger in feinkristalliner Form verwndet, die wasserlöslich sind und die die für das Pflanzenwachstum notwendigen Hauptnährstoffe der Gruppe NPKMg sowie Spurennährstoffe der Gruppe Fe, Mn, Cu, Zn, Co enthalten.

Ferner sind auch Flüssigdünger bekannt, die die technischen Salze bereits gelöst enthalten. Diese Flüssigkeitsdünger sind aber in ihrer Zusammensetzung für Hydrokulturen nicht optimal in ihrer Düngerwirkung, da sie zu wenig Stickstoff in Nitratform aufweisen, meistens Harnstoff in verschiedenen Mengen, um bei einer Lagerung bei niedrigeren Temperaturen Ausfällungen zu vermeiden.

Neben den erstgenannten Düngern, die für die Hydrokultur eingesetzt werden können, werden in neuerer Zeit vielfach auch Ionenaustauscherdünger auf Kunstharzbasis angeboten, die wasserunlöslich sind. Kleine Kunstharzkügelchen mit Kationen-und Anionenaustauschern binden hierbei reversibel einerseits die Metallkationen, wie beispielsweise Natrium, Kalium, Magnesium und andererseits die Anionen, wie Nitrate, Phosphate, Sulfate usw. Es wurde hier auch bereits vorgeschlagen (DE-A-28 19 871), diesen Ionenaustauschern Gips zuzusetzen, um hierdurch die Freisetzung der Nährstoffe zu ermöglichen bzw. zu steuern. Um diese Wirkung insbesondere auch über eine längere Zeitspanne zu erreichen, ist die Zugabe einer relativ hohen Menge an Gips in der Größenordnung von 1 - 2,5 Gramm pro Liter Nährlösung erforderlich, d.h. eine Zugabe von Gips in einer Konzentration, die weit über derjenigen Konzentration liegt, die bei der Herstellung von Nährlösungen insbes. für die Hydrokultur unter Verwendung von wasserlöslichen Pflanzennährsalzen oder Mischungen hiervon zulässig wäre, um Schäden sowie vor allem auch chemische, zu einem Ausfällen führende Reaktionen zwischen dem Gips und den verwendeten Pflanzennährsalzen zu vermeiden.

Vielfach wäre aber auch bei Nährlösungen für Hydrokulturen, die (Nährlösungen) unter Verwendung von Wasser und wasserlöslichen Pflanzennähsalzen hergestellt werden, ein Zusatz von Calcium notwendig oder wünschenswert, und zwar insbes. bei Calciummangel im verwendeten Wasser. Hier stellt sich dann allerdings das Problem, daß speziell bei einem wasserlösliche Pflanzennährsalze enthaltenden Dünger für Hydrokulturen, d.h. bei einem Dünger, der direkt im Wasser aufgelöst und nicht in einen als Puffer wirkenden Boden eingebracht wird, Calciumzusätze, wie Calciumsulfat, in der vorerwähnten Weise mit anderen Bestandteilen des Düngers reagieren und zu einer Ausfällung führen. Nach einer der Erfindung zugrundeliegenden Erkenntnis läßt sich dieses Problem nur dadurch vermeiden, daß der Anteil an Calciumzusatz, d.h. der Anteil an Calciumsulfat in bezug auf die übrigen Bestandteile des Düngers genau dosiert wird, was allerdings für den Anwender eines solchen Düngers in der Regel nicht möglich ist.

Aufgabe der Erfindung ist es, ein Verfahren zum Herstellen eines Düngers für Hydrokulturen bzw. einen derartigen Dünger aufzuzeigen, der neben Pflanzennährstoffen auch Calcium enthält und für den Verbraucher eine problemlose Anwendung gestattet.

Zur Lösung dieser Aufgabe sind ein Verfahren entsprechend dem kennzeichnenden Teil des Patentanspruches 1 sowie ein Dünger entsprechend dem kennzeichnenden Teil des Patentanspruches 8 ausgebildet.

Mit der Erfindung ist es erstmals gelungen, einen Dünger für Hydrokulturen zu schaffen, der neben wasserlöslichen Pflanzennährsalzen auch Calcium enthält und somit für Wasser verschiedener Härtegrade verwendbar ist, der durch seine Tablettenform der Anwendung einfach und unproblematisch ist sowie vor allem auch eine genaue Dosierung des Calciumanteils in bezug auf die übrigen Bestandteile des Düngers sowie in Bezug auf den Wasseranteil der hergestellten Nährlösung gestattet.

Die nach dem erfindungsgemäßen Verfahren hergestellten Tabletten enthalten vorzugsweise ca. 5 bis höchstens 20 Gewichtsprozent Calciumsulfat, d.h. etwa 25 - 100 mg, wobei zur Herstellung einer Nährlösung etwa vier Tabletten verwendet werden und diese Nährlösung dann etwa 100 - 400 mg Calciumsulfat je Liter Wasser aufweist, womit die Menge an Calciumsulfat je Liter Wasser weit unter 1 g liegt.

Grundsätzlich ist es auch möglich, mit dem erfindungsgemäßen Verfahren größere Tabletten herzustellen, die bei einem entsprechend größeren Anteil an Pflanzennährsalzen jeweils 1 - 2 g Calciumsulfat aufweisen und von denen dann zum Herstellen der Nährlösung jeweils eine entsprechend kleinere Anzahl verwendet wird. In jedem Fall ist aber dafür gesorgt, daß der Anteil an Calciumsulfat in der Nährlösung unter 1 g je Liter Wasser liegt.

Mit der Erfindung ist es unter Einsatz von Gips bzw. Calciumsulfat (CaSO₄x2H₂O) erstmals gelungen, einen Dünger für Hydrokulturen in Form einer Hydronährstofftablette zu schaffen, die alle Nährstoffe in wasserlöslicher und ausgewogener Menge einschließlich Calcium enthält und die eine Vollernährung von Hydropflanzen garantiert.

Die Erfindung wird nachfolgend an einigen Beispielen beschrieben, wobei bei den Beispielen 1 und 2 zur Herstellung des Düngers in Tablettenform ein Pflanzennährsalz der nachfolgend angegebenen Zusammensetzung verwendet wird:
NPKMg-Dünger auf Basis technischer Salze mit Spurenstoffen.

| | |
|---|---|
| Gehalt: | 15% N davon 10% NO₃-N, 5% NH₄-N |
| | 7% P₂0₅ |
| | 22% K₂O |
| | 6% MgO |
| | 0,1% Fe als Chelat |
| | 0,05% Mn, 0,03% B, 0,01% Zn, 0,002% Cu, |
| | 0,005% Mo, 0,002% Co |

### Beispiel 1

Zur Herstellung eines Düngers in Tablettenform mit einem 5%igen Anteil an Calciumsulfat werden, bezogen auf 100 Gewichtsprozent Dünger eingesetzt:

| | |
|---|---|
| Pflanzennährsalz | 90 Gewichtsprozent |
| Calciumsulfat | 4,96 Gewichtsprozent |
| Bindemittel zum Tablettieren | 5,04 Gewichtsprozent. |

Die aus dieser Mischung hergestellten Hydronährstofftabletten sind in ihrer Größe jeweils den Bedürfnissen der marktgängigen Hydrotopfgrößen derart angepaßt, daß jede Tablette einen Hydrotopf mit einem Volumen von 250 ml mit Nährstoffen ausreichend versorgen kann, aber durch Anwendung mehrerer Tabletten auch eine ausreichende Versorgung größerer Töpfe mit entsprechend größerem Volumen möglich ist. Jede Tablette wiegt dabei etwa 0,52 g und entspricht somit den obigen Anforderungen. Die Tablette kann ungelöst unter den Einsatztopf einer Hydrokultur gegeben werden. Weiterhin ist es selbstverständlich auch möglich, die jeweilige(n) Tablette(n) in einer entsprechenden Wassermenge aufzulösen und diese Nährstofflösung dann in den jeweiligen Hydrotopf einzubringen. Jede Tablette reicht dabei in ihrem Nährstoffgehalt für 250 ml Wasser, wobei beispielsweise für 1 l Wasser vier Tabletten notwendig sind. In einer unter Verwendung von vier Tabletten hergestellten Nährlösung sind 60 mg CaO je Liter Wasser enthalten, wobei auch bei 2-3° KH Karbonathärte des Wassers eine ausreichende Versorgung der Hydropflanze gewährleistet ist.

### Beispiel 2

Zur Herstellung eines Düngers in Tablettenform mit einem 10%igen Anteil an Calciumsulfat werden bezogen auf 100 Gewichtsprozent Mischung eingesetzt:

| | |
|---|---|
| Pflanzennährsalz | 85,10 Gewichtsprozent |
| Calciumsulfat | 9,86 Gewichtsprozent |
| Bindemittel bzw. Zusätze zum Tablettieren | 5,04 Gewichtsprozent. |

Aus dieser Mischung werden wiederum Tabletten mit jeweils einem Gewicht von 0,52 g hergestellt, wobei der Anteil an Calciumsulfat bei diesen Tabletten etwa doppelt so hoch ist wie bei den Tabletten nach dem Beispiel 1, d.h. bei Verwendung von vier Tabletten je Liter Wasser ergeben sich etwa 120 mg CaO.

### Beispiel 3

Hier wird zur Herstellung der Mischung ein Pflanzennährsalz mit 15% N, 6% P₂O₅, 22% K₂O, 6% MgO sowie mit den in den Beispielen 1 und 2 angegebenen Spurennährstoffen Fe, Mn, Cu, Zn und Co verwendet.

Bei diesem Beispiel werden für die Mischung eingesetzt:

| | |
|---|---|
| Pflanzennährsalz | 100 Anteile |
| Superphosphat mit ca. 50% Anteile Gips | 10 Anteile |
| Bindemittel zum Tablettieren | 4,5 Anteile. |

Aus dieser Mischung werden Tabletten mit jeweils einem Gewicht von 0,52 g hergestellt. In jeder Tablette sind insgesamt 56 mg CaO enthalten, und zwar aus dem Gipsanteil 30 mg CaO und aus dem wasserlöslichen Anteil von Monocalciumphosphat etwa 26 mg CaO.

Den in den vorstehenden Beispielen beschriebenen Düngern in Tablettenform können auch weitere Zusätze, nämlich systemische Fungizide, Insektizide und/oder Wuchsstoffe in wasserlöslicher Form zugegeben sein, wobei durch die Tablettenform eine genaue und insbes. auch auf die übrigen Bestandteile in optimaler Weise abgestimmte Dosierung dieser weiteren Zusätze ebenfalls gewährleistet ist.

## Patentansprüche

1. Verfahren zum Herstellen eines Düngers für Hydrokulturen, welcher Pflanzennährsalze und Gips enthält, dadurch gekennzeichnet, daß man eine Mischung aus wasserlöslichen Pflanzennährsalzen, die neben den Hauptnährstoffen N, P, K, Mg auch die Spurennährstoffe Fe, Mn, Cu, Zn, Co enthalten und unter 20 Gewichtsprozent Gips, bezogen auf 100 Gewichtsprozent Pflanzennährsalze, sowie einem Bindemittel zu Tabletten preßt.

2. Verfahren nach Anspruch 1, dadurch gekennzeichnet, daß man einen Teil des Gipses durch Superphosphat bzw. durch ein Gemisch aus Phosphaten und ca. 50 Gewichtsprozent Gips ersetzt.

3. Verfahren nach Anspruch 1, dadurch gekennzeichnet, daß man einen Teil des Gipses durch reines Calciumphosphat gemischt mit Calciumsulfat ersetzt.

4. Verfahren nach einem der Ansprüche 1 bis 3, gekennzeichnet durch die Verwendung von Pflanzennährsalzen, die als Phosphatkomponente zum Teil neutrales Calciumpyrophosphat und als Zusatzkomponente Ca-Chelat enthält.

5. Verfahren nach einem der Ansprüche 1 bis 4, gekennzeichnet durch eine Mischung, die, bezogen auf 100 Gewichtsprozent Mischung, 90 Gewichtsprozent Pflanzennährsalze, etwa 5 Gewichtsprozent Gips sowie etwa 5 Gewichtsprozent Bindemittel enthält.

6. Verfahren nach einem der Ansprüche 1 bis 4, gekennzeichnet durch die Verwendung einer Mischung, die, bezogen auf 100 Gewichtsprozent Mischung, etwa 85 Gewichtsprozent Pflanzennährsalze, etwa 10 Gewichtsprozent Gips und etwa 5 Gewichtsprozent Bindemittel enthält.

7. Verfahren nach einem der Ansprüche 1 bis 6, dadurch gekennzeichnet, daß man der Mischung zusätzlich systemische Fungizide, Insektizide und/oder Wuchsstoffe in wasserlöslicher Form zugibt.

8. Dünger für Hydrokulturen, welcher Pflanzennährsalze und Gips enthält, dadurch gekennzeichnet, daß eine Mischung aus wasserlöslichen Pflanzennährsalzen, die neben den Hauptnährstoffen N, P, K, Mg auch die Spurennährstoffe Fe, Mn, Cu, Zn, Co enthalten und unter 20 Gewichtsprozent Gips, bezogen auf 100 Gewichtsprozent Pflanzennährsalze, sowie aus einem Bindemittel zu Tabletten gepreßt ist.

9. Dünger nach Anspruch 8, dadurch gekennzeichnet, daß ein Teil des Gipses durch Superphosphat bzw. durch ein Gemisch aus Phosphaten und ca. 50 Gewichtsprozent Gips ersetzt ist, oder daß ein Teil des Gipses durch reines Calciumphosphat gemischt mit Calciumsulfat ersetzt ist.

10. Dünger nach Anspruch 8 oder 9, gekennzeichnet durch die Verwendung von Pflanzennährsalzen, die als Phosphatkomponente zum Teil neutrales Calciumpyrophosphat und als Zusatzkomponente Ca-Chelat enthält.

11. Dünger nach einem der Ansprüche 8 bis 10, gekennzeichnet durch eine Mischung, die, bezogen auf 100 Gewichtsprozent Mischung, 90 Gewichtsprozent Pflanzennährsalze, etwa 5 Gewichtsprozent Gips sowie etwa 5 Gewichtsprozent Bindemittel enthält, oder durch eine Mischung, die, bezogen auf 100 Gewichtsprozent Mischung, etwa 85 Gewichtsprozent Pflanzennährsalze, etwa 10 Gewichtsprozent Gips und etwa 5 Gewichtsprozent Bindemittel enthält.

12. Dünger nach einem der Ansprüche 8 bis 11, dadurch gekennzeichnet, daß der Mischung zusätzlich systemische Fungizide, Insektizide und/oder Wuchsstoffe in wasserlöslicher Form zugegeben sind.

## Claims

1. Method for the manufacture of a fertiliser for hydroponics, which contains plant nutrient salts and gypsum, characterised in that a mixture of water soluble plant nutrient salts, apart from the main nutrient salts N, P, K, Mg, also comprising the trace nutrient salts Fe, Mn, Cu, Zn, Co and under 20% by weight gypsum, referring to 100% by weight plant nutrient salts, as well as binding material, is pressed into tablets.

2. Method according to claim 1, characterised in that a part of the gypsum is replaced by superphosphate or by a mixture of phosphates and about 50% by weight gypsum.

3. Method according to claim 1, characterised in that a part of the gypsum is replaced by pure calcium phosphate mixed with calcium sulphate.

4. Method according to one of claims 1 to 3, characterised through the use of plant nutrient salts that comprise as the phosphate component partly neutral calcium pyrophosphate and calcium chelate as the additional component.

5. Method according to one of claims 1 to 4, characterised through a mixture that comprises, referring to 100% by weight mixture, 90% by weight plant nutrient salts, approximately 5% by weight gypsum as well as approximately 5% by weight binding material.

6. Method according to one of claims 1 to 4, characterised through the use of a mixture that comprises, referring to 100% by weight mixture, approximately 85% by weight plant nutrient salts, approximately 10% by weight gypsum and approximately 5% by weight binding material.

7. Method according to one of claims 1 to 6 characterised in that additionally, systemic fungicide, insecticide and/or growth factor in water soluble form is added to the mixture.

8. Fertiliser for hydroponics, comprising plant nutrient salts and gypsum, characterised in that a mixture of water soluble plant nutrient salts, apart from the main nutrient salts N, P, K, Mg, also comprising the trace nutrient salts Fe, Mn, Cu, Zn, Co and under 20% by weight gypsum, referring to 100% by weight plant nutrient salts, as well as binding material, is pressed into tablets.

9. Fertiliser according to claim 8, characterised in that a part of the gypsum is replaced with superphosphate or a mixture of phosphates and about 50% by weight gypsum, or that a part of the gypsum is replaced by pure calcium phosphate mixed with calcium sulphate.

10. Fertiliser according to claims 8 or 9, characterised through the use of plant nutrient salts that comprise, as the phosphate component, partly neutral calcium pyrophosphate and calcium chelate as the additional component.

11. Fertiliser according to one of claims 8 to 10, characterised through a mixture that comprises, referring to 100% by weight mixture, 90% by weight plant nutrient salts, approximately 5% by weight gypsum as well as approximately 5% by weight binding material, or through a mixture that comprises, referring to 100% by weight mixture, approximately 85% by weight plant nutrient salts, approximately 10% by weight gypsum and approximately 5% by weight binding material.

12. Fertiliser according to one of claims 8 to 11, characterised in that additionally systemic fungicide, insecticide and/or growth factor in water soluble form is added to the mixture.

## Revendications

1. Procédé de fabrication d'un engrais pour hydrocultures (cultures de plantes dans des récipients avec des solutions nutritives à la place du sol naturel) lequel contient des sels nutritifs pour plantes et du plâtre caractérisé en ce qu'on comprime en tablettes un mélange de sels nutritifs pour plantes solubles dans l'eau contenant, outre les substances nutritives principales N, P, K, Mg, également les substances nutritives constituées par les oligo-éléments ou éléments de trace Fe, Mn, Cu, Zn, Co et moins de 20% en poids de plâtre, par rapport à 100% en poids de sels nutritifs pour plantes, ainsi que d'un liant.

2. Procédé selon la revendication 1 caractérisé en ce qu'on remplace une partie du plâtre par du superphosphate ou par un mélange de phosphates et d'environ 50%, en poids de plâtre.

3. Procédé selon la revendication 1 caractérisé en ce qu'on remplace une partie du plâtre par du phosphate de calcium pur en mélange avec du sulfate de calcium.

4. Procédé selon l'une des revendications 1 à 3 caractérisé par l'utilisation de sels nutritifs pour plantes qui contiennent comme constituant de phosphate en partie du pyrophosphate de calcium neutre et comme constituant supplémentaire du chélate de calcium.

5. Procédé selon l'une des revendications 1 à 4 caractérisé par un mélange qui, pour 100% en poids de mélange, contient 90% en poids de sels nutritifs pour plantes, environ 5% en poids de plâtre ainsi qu'environ 5% en poids de liant.

6. Procédé selon l'une des revendications 1 à 4 caractérisé par l'utilisation d'un mélange qui, pour 100% en poids de mélange, contient environ 85% de sels nutritifs pour plantes, environ 10% en poids de plâtre et environ 5% en poids de liant,

7. Procédé selon l'une des revendications 1 à 6 caractérisé en ce qu'on ajoute en supplément au mélange des fongicides, des insecticides et/ou des substances systémiques favorisant la croissance, sous une forme soluble dans l'eau.

8. Engrais pour hydrocultures contenant des sels nutritifs pour plantes et du plâtre caractérisé en ce qu'un mélange de sels nutritifs pour plantes solubles dans l'eau qui contiennent, outre les substances nutritives principales N, P, K, Mg, également les substances nutritives constituées par les oligo-éléments ou éléments de trace Fe, Mn, Cu, Zn, Co et moins de 20% en poids de plâtre pour 100% en poids de sels nutritifs pour plantes, ainsi que d'un liant est comprimé en tablettes.

9. Engrais selon la revendication 8 caractérisé en ce qu'une partie du plâtre est remplacée par du superphosphate ou par un mélange de phosphates et d'environ 50% en poids de plâtre ou qu'une partie du plâtre est remplacée par du phosphate de calcium pur en mélange avec du sulfate de calcium.

10. Engrais selon la revendication 8 ou 9 caractérisé par l'utilisation de sels nutritifs pour plantes qui contient comme constituant de phosphate du pyrophosphate de calcium neutre en partie et comme constituant supplémentaire du chélate de Ca.

11. Engrais selon l'une des revendications 8 à 10 caractérisé par un mélange qui, pour 100% en poids de mélange, contient 90% en poids de sels nutritifs pour plantes, environ 5% en poids de plâtre ainsi qu'environ 5% en poids de liant, ou par un mélange qui, pour 100% en poids de mélange, contient environ 85% en poids de sels nutritifs pour plantes, environ 10% en poids de plâtre et environ 5% de liant.

12. Engrais selon l'une des revendications 8 à 11 caractérisé en ce que le mélange est additionné en supplément de fongicides, d'insecticides et/ou de substances favorisant la croissance systémiques sous une forme soluble dans l'eau.
